# EUROPÄISCHE PATENTSCHRIFT

(11) **EP 1 915 840 B1**
(45) Veröffentlichungstag und Bekanntmachung des Hinweises auf die Patenterteilung: **13.05.2009**
(21) Anmeldenummer: 06792564.4
(22) Anmeldetag: 25.07.2006
(51) Int. Cl.: H04L 12/56, H04R 1/04

(54) **MOBILES DIKTIERSYSTEM**
MOBILE DICTATING SYSTEM
SYSTEME A DICTER MOBILE

(30) Priorität: 09.08.2005 DE 202005012508 U
(43) Veröffentlichungstag der Anmeldung: 30.04.2008
(73) Patentinhaber: GBS Holding GmbH, 81827 München (DE)
(72) Erfinder: KELLER, Klaus, 90765 Fürth (DE)
(74) Vertreter: Pröll, Jürgen
(86) Internationale Anmeldenummer: PCT/EP2006/064635
(87) Internationale Veröffentlichungsnummer: WO 2007/017374

(56) Entgegenhaltungen:
- WO-A-01/27738
- WO-A-01/31954
- WO-A-03/055183
- JON B POSTEL: "Transmission Control Protocol" TRANSMISSION CONTROL PROTOCOL, Nr. 793, September 1981 (1981-09), Seiten 13-14,16, XP002137141

## Beschreibung

Die Erfindung betrifft ein mobiles Diktiersystem mit den Merkmalen des Patentanspruches 1.

Aus der DE 20 2005 000 172 U1 ist ein Diktiermikrophon bekannt, welches zur Aufzeichnung und Abspeicherung von Schalldaten dient. Das Mikrophon zeichnet insbesondere Geräusche eines schlafenden Menschen auf und speichert diese zwischen. Die Daten können dann per Funk an ein anderes Gerät übertragen und dort ausgewertet werden.

Aus der DE 20 2004 019 741 U1 ist ein Sprachaufzeichnungsgerät offenbart. Dieses besteht aus einer Leseeinheit, einem Mikrophon und einer Funkschnittstelle. Mittels des Sprachaufzeichnungsgerätes wird Sprache aufgezeichnet und kann über die Funkschnittstelle an ein weiteres Gerät übertragen werden.

Aus der DE 198 17 929 A1 ist ein Kommunikationssystem zur Übertragung von Signalen offenbart. Dieses weist ein Kartenlesegerät auf und dient zur Übertragung von aufgezeichneten Video- oder Sprachsignalen.

Aus der US-A-5 398 220 ist ein weiteres tragbares Sprachaufnahmegerät bekannt. Dieses weist einen Datenspeicher auf, auf welchem aufgenommene Sprachdaten abspeicherbar sind. Über eine Schnittstelle können diese Daten an ein zweites Gerät übertragen werden.

Aus der WO 01/27738 A ist ein Diktiermikrophon offenbart. Das Diktiermikrophon steht mit einem Computer über eine bidirektionale Funkschnittstelle in Verbindung. Anhand von Daten, welche vom PC abgesendet werden, wird die Qualität der Funkübertragung bestimmt. Solange eine optimale Übertragungsstrecke besteht, werden die Daten vom mobilen Mikrofon an die Feststation übertragen. Ist die Funkstrecke qualitativ schlechter werdend, werden die Daten zwischengespeichert.

Aus der WO 03/055183 A ist ein Head-Set, welches per Funkübertragung mit einem mobilen Telefon in Verbindung steht, bekannt. Hierbei werden kontinuierlich die Daten übertragen, eine Kontrolle der Qualität der Funkübertragung ist nicht angedacht.

Aus der WO 01/31954 A ist ein System und ein Verfahren zur Anzeige von Verbindungseigenschaften eines Anrufs über ein drahtloses Telefon offenbart.
Hierbei werden Kennungen bezüglich der Art des Anrufs übertragen und ausgewertet.

Aus Jon B. Postel "Transmission Control Protocol", Nr. 793, September 1981 (1981-09), Seiten 13 bis 14, 16 XP 002137141 ist ein TCP/IP Protokoll bekannt.

Aufgabe der vorliegenden Vorrichtung ist es, ein Diktiermikrophon aufzuzeigen, welches tragbar ist und die aufgenommenen Daten kontinuierlich und sicher auf eine zugeordnete Weiterverarbeitungsstation überträgt, auch für den Fall, dass es zu einer Unterbrechung der Datenübertragung kommt. Diese Aufgabe wird anhand der Merkmale des Anspruches 1 gelöst. Vorteilhafte Ausgestaltungen der Erfindung ergeben sich anhand der abhängigen Unteransprüche, der Beschreibung sowie der Figuren und deren Beschreibung.

Das Diktiermikrophon besteht aus einer Spracheingabeeinheit, einem Lautsprecher, einem Mikroprozessor, einem Speicher, einer zumindest mit dem Diktiermikrophon verbundenen taktilen Eingabeeinheit und einer Funkübertragungsschnittstelle. Die Funkübertragungsschnittstelle ist in vorzugsweiser Ausgestaltung der Erfindung als Bluetooth-Schnittstelle, LF-Schnittstelle, HF-Schnittstelle oder IR-Schnittstelle ausgebildet.

Im Weiteren ist eine dem Diktiermikrophon zugeordnete Weiterverarbeitungsstation vorhanden, welche ein Gegenstück zur Funkübertragungsschnittstelle des Mikrophons aufweist und an welche das Diktiermikrophon per Funk die aufgenommenen Sprachsignaldaten, insbesondere Diktate bzw. Diktatteile überträgt.

Die Übertragung dieser Daten erfolgt kontinuierlich, das heißt, sobald ein Benutzer Daten eingesprochen hat, werden diese zunächst in einem A/D-Wandler digitalisiert und dann sofort in einen Zwischenspeicher geschrieben. Dieser Vorgang wird von einer Mikrocomputereinheit gesteuert. Aus dem Zwischenspeicher werden die Daten ausgelesen und über die Funkschnittstelle übertragen. Die Daten werden in vorzugsweiser Ausgestaltung der Erfindung mit einer Header-Datei bzw. einem Header versehen, in welcher die Datenmengen und die Datenpakete und deren Durchnummerierung eingetragen sind. Nachdem die Übertragung eines Datenpaketes vom Diktiermikrophon zur Weiterverarbeitungsstation erfolgt ist, wird ein Quittierungssignal im Diktiermikrophon erwartet. Erst wenn dieses Quittierungssignal vorliegt, werden die Daten aus dem Zwischenspeicher gelöscht. Im Weiteren ist vorteilhaft an dem Diktiermikrophon, dass, wenn die Übertragung gestört ist oder wenn sich der Benutzer mit dem Mikrophon aus dem Sendebereich und Empfangsbereich begibt, keine Daten verloren gehen. Diese werden zunächst in den Zwischenspeicher geschrieben und dann, sobald wieder eine Funkverbindung besteht, an die Station übertragen. Durch das Quittungssignal ist stets gewährleistet, dass kein Datenverlust vorhanden ist. Daher ist das Mikrophon flexibel einsetzbar und nicht, wie diverse Bluetooth-Komponenten, nur in einem vordefinierten Empfangsbereichsfeld einsetzbar. Durch den Zwischenspeicher und nur in Abhängigkeit des Zwischenspeichers, ist die Flexibilität begrenzt.

In einer weiteren vorteilhaften Ausgestaltung der Erfindung weist das Diktiermikrophon eine Schnittstelle für eine Speichereinheit auf, wodurch der im Gerät vorhandene Zwischenspeicher erweitert werden kann. Bei diesem Speicher handelt es sich in vorzugsweiser Ausführung um eine Schnittstelle für eine Speicherkarte in Form einer SD- oder Multimediacard, eine Mini-SD, eines Memorysticks oder eines jeden anderen bekannten Speicherkartenformats.

Diese Ausführungsform ist sehr flexibel, da diese Speicherkarten nur ein geringes Gewicht und ein geringes Abmaß haben.

In weiterer vorteilhafter Ausgestaltung der Erfindung ist das Diktiermikrophon als Head-Set ausgestaltet. Hierdurch ist eine effektive und einfache Anordnung gegeben.

Der Lautsprecher für die akustische Ausgabe von Daten ist als Ohrhörer ausgestaltet.

Durch die oben genannte Ausführungsform ist der Nutzer des Diktiermikrophons in der Lage, ohne Verlust von Daten, auch entfernt von der Weiterverarbeitungsstation, zu diktieren, da bei Annäherung und Bestehen der Funkverbindung zwischen dem Diktiermikrophon und der Weiterverarbeitungsstation die Daten aus dem Zwischenspeicher des Diktiermikrophons übertragen werden. Im Weiteren ist eine Visualisierungseinheit am Diktiermikrophon vorhanden, welche dem Nutzer anzeigt, ob aktuell Daten im Zwischenspeicher gespeichert sind. Dies ist insbesondere dann vorteilhaft, wenn der Nutzer das Diktiermikrophon ausschalten will. Um hierbei Datenverlust zu vermeiden, wird einem Nutzer visuell oder akustisch angezeigt, dass im Zwischenspeicher noch Daten sind, welche noch nicht übertragen sind. In einer weiteren vorteilhaften Ausgestaltung der Erfindung kann das Diktiermikrophon nur ausgeschaltet werden, wenn der Zwischenspeicher leer ist. Andernfalls könnte es, wenn das Gerät ausgeschaltet wird, zu Datenverlust führen.

Im Weiteren ist eine taktile Eingabeeinheit vorhanden, welche es ermöglicht, das Diktiermikrophon aber auch die Weiterverarbeitungsstation zu steuern. Diese Steuerungsdaten, welche in Reaktion auf Eingaben eines Nutzers an der taktilen Eingabeeinheit erzeugt werden, werden von der Mikrocomputereinheit im Diktiermikrophon über die Funkschnittstelle an die Weiterverarbeitungsstation übertragen und dort als Bedieneingabefunktionen ausgewertet.

Wird beispielsweise bei einem bereits in Teilen diktierten Diktat, welches bereits auf die Weiterverarbeitungsstation übertragen ist, ein Rückspulen gewünscht, so wird dieses über die taktile Eingabeeinheit durch entsprechende Betätigung derselben eingeleitet, diese Daten werden als Steuerungsdaten gekennzeichnet und an die Weiterverarbeitungsstation übertragen und dort ausgewertet. Die entsprechenden Daten werden dann von der Weiterverarbeitungsstation über die Funkschnittstelle an das Diktiermikrophon übertragen und dort in den Zwischenspeicher geschrieben. Derartige von der Weiterverarbeitungsstation stammende Daten sind gekennzeichnet und werden nicht mehr an die Weiterverarbeitungsstation rückübertragen, es sei denn, ein Nutzer verändert diese Daten durch Einfügung oder Löschung bzw. Teillöschung. Diese werden, nachdem sie nicht mehr benötigt werden, aus dem Zwischenspeicher gelöscht.

Begibt sich ein Nutzer mit dem Diktiergerätmikrophon außerhalb des Funkbereichs, so wird ihm dies durch die Visualisierungseinheit angezeigt. Er kann weiter diktieren, bis der Zwischenspeicher gefüllt ist. Der Füllstand des Zwischenspeichers wird dem Benutzer über die Visualisierungseinheit angezeigt. Kurz bevor der Zwischenspeicher seine Speichermenge ausgeschöpft hat und es dann bei weiterer Eingabe zu Datenverlust führen würde, wird dies dem Nutzer signalisiert, entweder über die akustische Ausgabeeinheit in Form eines Warnsignals über Ton oder über die visuelle Anzeigeeinheit.

Ist der Benutzer außerhalb des Empfangsbereichs, füllt sich der Zwischenspeicher durch das Diktieren. Kehrt er wieder in den Empfangsbereich zurück, so kann er einfach weiterdiktieren und der Zwischenspeicher wird entsprechend der Daten-Übertragungsgeschwindigkeit der Funkschnittstelle geleert.

Am Diktiermikrophon ist in einer vorteilhaften Ausgestaltung der Erfindung ein Schiebe-Schalter mit vier Stellungen vorgesehen, wobei der Schiebeschalter vorzugsweise relativ breit im Verhältnis zum Gehäuse des Diktiermikrophons ausgestaltet ist. Der Schiebeschalter weist in einer möglichen Ausgestaltung die Stellungen Vorlauf / Stopp / Start / Rücklauf auf und sitzt vorzugsweise mittig, ergonomisch auf der Frontseite des Diktiermikrophons. Die Lagerung des Schiebeschalters kann verschiedenartig ausgestaltet sein, beispielsweise als Gleit-, Kugel- oder Rollengelager.

In einer weiteren vorteilhaften Ausgestaltung der Erfindung sind zwei unterschiedliche Tasten zum Start einer Aufzeichnung vorhanden, eine für die Funktion Record und eine für die Funktion Insert/Info. Die Record-Taste ist mittig angeordnet, vorzugsweise oberhalb des Schiebeschalters und ein am Diktiermikrophon angeordnetes LED-Band, welches vorzugsweise an der Oberkante des Diktiermikrophons angeordnet ist, zeigt eine kennzeichnende Farbe (vorzugsweise rote), wenn diese Taste betätigt ist. Die Insert-/Info-Taste ist vorzugsweise rechts neben dem Schiebeschalter angeordnet und das LED-Band zeigt eine kennzeichnende Farbe (vorzugsweise orange/ gelbe), wenn diese Taste aktiviert ist. Außerdem ist eine Index-Taste vorgesehen, welche die Funktionen "Diktat Neu / Ende" repräsentiert. Das LED-Band zeigt eine blaue Farbe, wenn diese Taste aktiviert ist. Diese Taste ist vorzugsweise links von der Record-Taste angeordnet.

In vorteilhafter Ausgestaltung der Erfindung ist die Visualisierungseinheit als Area Color-Display ausgestaltet. Es dient beispielsweise zur Anzeige
- der Feldstärke, vorzugsweise der Empfangsfeldstärke, welche z.B. in Form eines Balkens dargestellt ist;
- des Akkuladezustand, wobei der Ladezustand z.B. in Form eines Balkens dargestellt ist;
- der NF-Aussteuerung, welche wiederum beispielsweise als Balken darstellbar ist;
- des Füllstands des internen Puffers, des Füllstands des internen Speichers, zur Anzeige des Speicherzustands der eingegebenen Sprachsignale.

Zur Erhöhung der Akku-Lebensdauer wird nach kurzer Zeit die Helligkeit der Anzeige reduziert, wobei die Reduzierung in mehreren Stufen erfolgen kann.

Im Weiteren werden das Diktiergerätemikrophon sowie die zugehörige Basisstation anhand eines konkreten Ausführungsbeispiels anhand einer Figur näher beschrieben. Diese Ausgestaltungsform stellt keine Limitierung der Erfindung dar und ist lediglich ein beispielhaftes Ausführungsbeispiel, in welchem die wesentlichen Funktionen und Funktionsmerkmale der Erfindung dargestellt sind.

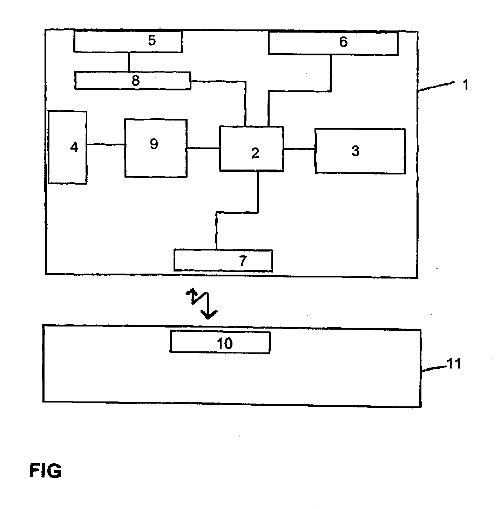

Es zeigt die Figur FIG eine erfindungsgemäße mobile Diktiermikrophoneinheit 1, welche aus mindestens einer akustischen Eingabeeinheit 5, einer akustischen Ausgabeeinheit 4, einer Mikrocomputereinheit 2, einer Speichereinheit 3, einer taktilen Eingabeeinheit 6 und einer Funkschnittstelleneinheit 7, welche einen Sender und einen Empfänger für Funksignale aufweist, besteht. Im Weiteren sind eine A/D-Wandlereinheit 8 und eine D/A-Wandlereinheit 9 vorhanden. Schließlich ist in der Figur eine Feststation PC dargestellt, mit einer weiteren Funkschnittstelleneinheit 10.

Die Funkschnittstelleneinheiten 7 und 10 sind aufeinander abgestimmt und dienen zum Austausch von Daten zwischen der mobilen Diktiermikrophoneinheit 1 und der Feststation PC = 11. Die Funkschnittstelleneinheiten 7 und 10 sind in vorteilhafter Ausgestaltung der Erfindung als Bluetooth-Schnittstellen, LF-, HF- oder IR-Schnittstellen ausgebildet.

Die mobile Diktiermikrophoneinheit 1 wird bei der Erstinbetriebnahme durch einen Nutzer einer Feststation 11 zugewiesen. Hierdurch ist es möglich, dass in einem Umfeld mehrere mobile Diktiermikrophoneinheiten zugleich ohne Störungen untereinander betrieben werden können. Hierzu werden bei der Datenübertragung zwischen der mobilen Diktiermikrophoneinheit 1 und der Feststation 11 in den Headerdateien, welche optional bei der Übertragung zum Einsatz kommen, Verifizierungsdaten übertragen, welche eine eindeutige Zuweisung eines Sendekanals und der Daten bei der Übertragung festlegen und somit Störungen vermieden werden.

Spricht ein Nutzer in die akustische Eingabeeinheit 5 der mobilen Diktiermikrophoneinheit 1, erkennt dies die Mikrocomputereinheit 2 automatisch anhand eines Pegelanstieges oder aber der Nutzer muss die mobile Diktiermikrophoneinheit 1 über die taktile Eingabeeinheit 6 zur Aufnahme von Spracheingaben aktivieren und starten.

Die Spracheingaben werden in der A/D-Wandlereinheit 9 digitalisiert und dann sofort in die Speichereinheit 3 geschrieben. Diesen Vorgang steuert die Mikrocomputereinheit 2. Die Mikrocomputereinheit 2 liest dann diese Daten sequentiell aus der Speichereinheit 3 aus und leitet diese an die Funkschnittstelleneinheit 7 weiter. Diese überträgt die Daten per Funk an die Funkschnittstelleneinheit 10 in der Feststation. Die Daten werden in vorteilhafter Ausgestaltung der Erfindung mit einer Header-Datei bzw. einem Header versehen, in welcher die Datenmengen und die Datenpakete und deren Durchnummerierung eingetragen sind. Nachdem die Übertragung eines Datenpaketes von der mobilen Diktiermikrophoneinheit 1 zur Feststation 11 erfolgt ist, erwartet die Mikrocomputereinheit 2 ein Quittierungssignal. Erst wenn dieses Quittierungssignal vorliegt, löscht die Mikrocomputereinheit 2 diese übertragenen Daten aus der Speichereinheit 3.

Das Quittierungssignal und die Löschfunktion können auch paketdatenweise organisiert sein.

Die Übertragung der digitalisierten Daten, insbesondere der digitalisierten Sprachdaten, erfolgt kontinuierlich und mit maximal zur Verfügung stehender Datenübertragungsrate. Sobald ein Nutzer Daten eingesprochen hat, werden diese nach der Digitalisierung und Zwischenspeicherung in der Speichereinheit 3 an die Feststation 11 übertragen.

Im Weiteren erkennt die Mikrocomputereinheit 2, wenn die Übertragung gestört ist oder wenn sich der Benutzer mit dem mobilen Diktiermikrophon 1 aus dem Sende- und Empfangsbereich der Funkschnittstelleneinheiten 7, 10 begibt. Damit keine Daten verloren gehen, speichert die Mikrocomputereinheit 2 diese zunächst in der Speichereinheit 3, eine Versendung erfolgt nur, wenn eine Funkverbindung besteht. Durch das Quittungssignal ist stets gewährleistet, dass kein Datenverlust vorhanden ist. Daher ist die mobile Diktiermikrophoneinheit 1 flexibel einsetzbar und nicht, wie diverse Bluetooth-Komponenten, nur in einem vordefinierten Empfangsbereichsfeld einsetzbar. Durch die Zwischenspeicherung in der Speichereinheit 3 ist eine Datensicherheit gegeben. Nur in Abhängigkeit der Größe der Speichereinheit 3 ist die Flexibilität begrenzt.

In weiterer vorteilhafter Ausgestaltung der Erfindung ist die mobile Diktiermikrophoneinheit 1 als Head-Set ausgestaltet. Hierdurch ist eine effektive und einfache Anordnung gegeben. Die akustische Ausgabeeinheit 4 ist in Form eines Lautsprechers, eines Ohrhörers oder eines Piezoelementes realisiert

Im Weiteren ist eine Visualisierungseinheit an der mobilen Diktiermikrophoneinheit 1 vorhanden, welche dem Nutzer anzeigt, ob aktuell Daten in der Speichereinheit 3 gespeichert sind. Dies ist insbesondere dann vorteilhaft, wenn der Nutzer die mobile Diktiermikrophoneinheit 1 ausschalten will. Um hierbei Datenverlust zu vermeiden, wird einem Nutzer visuell oder akustisch angezeigt, dass in der Speichereinheit 3 noch Daten sind, welche noch nicht übertragen sind. In einer weiteren vorteilhaften Ausgestaltung der Erfindung kann die mobile Diktiermikrophoneinheit 1 nur ausgeschaltet werden, wenn die Speichereinheit 3 leer ist.

In einer vorteilhaften Ausgestaltung der Erfindung fasst die Mikrocomputereinheit 2 bei der Abspeicherung der Daten in der Speichereinheit 3 die eingehenden Daten in Paketen zusammen und gibt jedem Paket eine fortlaufende Nummer und eine definierte Größe, d.h. die Mikrocomputereinheit 2 fasst die Daten in Pakete definierter Größe zusammen.

In einer weiteren vorteilhaften Ausgestaltung der Erfindung wird der Füllstand der Speichereinheit 3 über die Visualisierungseinheit angezeigt. Die Visualisierungseinheit ist als Display ausgestaltet und der Füllstand der Speichereinheit 3 wird als Laufbalken angezeigt. Die Mikrocomputereinheit 2 erzeugt beim Erreichen eines Füllgrades der Speichereinheit 3 von mindestens 90% ein Warnsignal für den Nutzer, damit dieser informiert ist, dass die Speichereinheit 3 an die Speicherfüllgrenze stößt und er, um Datenverlust zu vermeiden, die Datenübertragung initiieren soll und/oder sich wieder in den Funkübertragungsbereich begeben soll, damit die Daten auf die Feststation 11 übertragen werden können.

## Patentansprüche

1. Mobiles Diktiersystem mit einer mobilen Diktiermikrophoneinheit, bestehend aus einer Mikrocomputereinheit (2), einer Speichereinheit (3), einer akustischen Eingabeeinheit (4) und einer ersten Funkschnittstelleneinheit (7), wobei mittels der ersten Funkschnittstelleneinheit (7) von der Diktiermikrophoneinheit (1) zu einer Feststation (PC) mit einer zweiten Funkschnittstelleneinheit eine Funkverbindung aufgebaut ist, wobei akustische Eingaben in die akustische Eingabeeinheit (4) erfolgen und eine Analog-Digital-Wandlereinheit (9) diese Eingaben digitalisiert, und die Mikrocomputereinheit (2) diese digitalisierten Eingaben in der Speichereinheit (3) speichert, **dadurch gekennzeichnet, dass** die Mikrocomputereinheit (2) diese gespeicherten Daten kontinuierlich zur ersten Funkschnittstelleneinheit (7) leitet, welche diese gespeicherten Daten über die Funkverbindung von der Diktiermikrophoneinheit (1) an die zweite Funkschnittstelleneinheit (10) der Feststation (PC) überträgt, wobei die Feststation (PC) die übertragenen Daten speichert, wobei die Mikrocomputereinheit (2) die gespeicherten Daten aus der Speichereinheit (3) bei bestehender Funkverbindung zwischen der ersten Funkschnittstelleneinheit (7) und der zweiten Funkschnittstelleneinheit (10) kontinuierlich und mit maximal zur Verfügung stehender Datenübertragungsrate zur Übertragung steuert und die Mikrocomputereinheit (2) beim Erkennen einer Unterbrechung und/oder Störung der Funkverbindung die Datenübertragung unterbricht und dann die von der Analog-Digital-Wandlereinheit (9) kommenden Daten in die Speichereinheit (3) speichert, bis die Unterbrechung und/oder Störung der Funkverbindung nicht mehr besteht, die Mikrocomputereinheit (2) bei der Abspeicherung der Daten in der Speichereinheit (3) die eingehenden Datenpakte zusammenfasst und die Mikrocomputereinheit (2) die Daten aus der Speichereinheit (3) löscht, sobald ein Quittungssignal empfangen ist, welches von der Feststation (PC) nach jedem Empfang eines Datenpakets gesendet wird und die mobile Diktiermikrophoneinheit (1) eine Anzeigeeinheit aufweist.

2. Mobiles Diktiersystem nach Anspruch 1, **dadurch gekennzeichnet, dass** die mobile Diktiermikrophoneinheit (1) eine taktile Eingabeeinheit (6) aufweist.

3. Mobiles Diktiersystem nach Anspruch 1 oder 2, **dadurch gekennzeichnet, dass** die erste Funkschnittstelleneinheit (7) und die zweite Funkschnittstelleneinheit (10) als Bluetooth-Schnittstelle, LF- oder HF-Schnittstelle oder IR-Schnittstelle ausgebildet sind.

4. Mobiles Diktiersystem nach einem oder mehreren der vorangehenden Ansprüche, **dadurch gekennzeichnet, dass** die Mikrocomputereinheit (2) bei der Abspeicherung der Daten in der Speichereinheit (3) jedem Paket die Datengröße und eine fortlaufende Nummer zuweist.

5. Mobiles Diktiersystem nach einem oder mehreren der vorangehenden Ansprüche, **dadurch gekennzeichnet, dass** die Mikrocomputereinheit (2) die zu übertragenden Daten mit einer Header-Datei oder einem Header versieht, in welcher die Mikrocomputereinheit (2) die Datenmenge eines jeden Datenpaketes und dessen Nummer einträgt.

6. Mobiles Diktiersystem nach einem oder mehreren der vorangehenden Ansprüche, **dadurch gekennzeichnet, dass** die mobile Diktiermikrophoneinheit (1) eine Schnittstelle für eine Erweiterung der Speicherkapazität der Speichereinheit (3) aufweist, wobei die Schnittstelle zur Aufnahme einer SD-Speicherkarte oder Multimediaspeicherkarte, eine Mini-SD-Karte oder ein Memorystick vorgesehen ist.

7. Mobiles Diktiersystem nach einem oder mehreren der vorangehenden Ansprüche, **dadurch gekennzeichnet, dass** die mobile Diktiermikrophoneinheit (1) als Head-Set oder als am Kopf eines Nutzers befestigbar ausgestaltet ist.

8. Mobiles Diktiersystem nach einem oder mehreren der vorangehenden Ansprüche, **dadurch gekennzeichnet, dass** die mobile Diktiermikrophoneinheit (1) eine akustischen Ausgabeeinheit (5) aufweist, welche als Ohrhörer ausgestaltet ist und/oder die Anzeigeeinheit anzeigt, ob Daten in der Speichereinheit (3) gespeichert sind, wobei die Anzeigeeinheit eine optische Anzeige in Form einer Diode oder eine akustische Anzeige ist.

9. Mobiles Diktiersystem nach einem oder mehreren der vorangehenden Ansprüche, **dadurch gekennzeichnet, dass** die Mikrocomputereinheit (2) ein Ausschalten der mobilen Diktiermikrophoneinheit (1) nur dann ermöglicht, wenn die Speichereinheit (3) leer ist.

10. Mobiles Diktiersystem nach einem oder mehreren der vorangehenden Ansprüche, **dadurch gekennzeichnet, dass** die Mikrocomputereinheit (2) in Reaktion auf Eingaben eines Nutzer an der taktilen Eingabeeinheit (6) von der Feststation (PC) dort gespeicherte Datenpakete anfordert und diese dann an die mobile Diktiermikrophoneinheit (1) übertragen werden und über die akustische Ausgabeeinheit (4) wiedergebbar sind.

11. Mobiles Diktiersystem nach einem oder mehreren der vorangehenden Ansprüche, **dadurch gekennzeichnet, dass** die Mikrocomputereinheit (2) die rückübertragenen Daten als solche in der Speichereinheit (3) kennzeichnet und diese nur dann rücküberträgt, wenn diese Daten von einem Nutzer in der Speichereinheit (3) über die taktile Eingabeeinheit (6) verändert sind und/oder die Mikrocomputereinheit (2) die rückübertragenen Daten als veränderte Daten kennzeichnet, wenn eine Einfügung oder Löschung oder Teillöschung der Daten von einem Nutzer initiiert wurde.

12. Mobiles Diktiersystem nach einem oder mehreren der vorangehenden Ansprüche, **dadurch gekennzeichnet, dass** die Mikrocomputereinheit (2) über die Visualisierungseinheit angezeigt, wenn die Funkverbindung zwischen der ersten und der zweiten Funkschnittstelleneinheit (7, 10) unterbrochen ist und/oder die Mikrocomputereinheit (2) die über die akustische Eingabeeinheit (5) eingegebenen Daten in der Speichereinheit (3) speichert, bis diese gefüllt ist und/oder die Mikrocomputereinheit (2) den Füllstand der Speichereinheit (3) über die Visualisierungseinheit angezeigt, wobei die Visualisierungseinheit ein Display ist und den Füllstand der Speichereinheit (3) als Laufbalken anzeigt.

13. Mobiles Diktiersystem nach einem oder mehreren der vorangehenden Ansprüche, **dadurch gekennzeichnet, dass** die Mikrocomputereinheit (2) bei einem Erreichen eines Füllgrades von mindestens 90% ein Warnsignal erzeugt.

14. Mobiles Diktiersystem nach einem oder mehreren der vorangehenden Ansprüche, **dadurch gekennzeichnet, dass** das Quittierungssignal, die Löschfunktion und die Datenübertragung paketdatenweise organisiert sind.

## Claims

1. Mobile dictating system with a mobile dictating microphone unit, consisting of a microcomputer unit (2), a memory unit (3), an acoustic input unit (4) and a first radio interface unit (7), wherein a radio connection is establishes by means of the first radio interface unit (7) from the dictating microphone unit (1) to a base station (PC) with a second radio interface unit, wherein acoustic inputs into the acoustic input unit (4) are carried out and an analog-to-digital converter unit (9) digitises these inputs, and the microcomputer unit (2) stores these digitised inputs in the memory unit (3), **characterised in that** the microcomputer unit (3) continuously conducts those stored data to the first radio interface unit (7), which transmits these stored data by way of the radio connection from the dictating microphone unit (1) to the second radio interface unit (10) of the base station (PC), wherein the base station (PC) stores the transmitted data, wherein the microcomputer unit (2) controls the stored data from the memory unit (3), when the radio connection is present between the first radio interface unit (7) and the second radio interface unit (10), continuously and at maximum available data transmission rate for transmission and the microcomputer unit (2) on recognition of an interruption and/or disturbance of the radio connection interrupts the data transmission and then stores in the memory unit (3) the data coming from the analog-to-digital converter unit (9) until the Interruption and/or disturbance of the radio connection is no longer present, the microcomputer unit (2) on storage of the data in the memory unit (3) combines the entering data packets and the microcomputer unit (2) erases the data from the memory unit (3) as soon as an acknowledgement signal is received, which is transmitted by the base station (PC) after each reception of a data packet and the mobile dictating microphone unit (1) comprises a indicating unit.

2. Mobile dictating system according to claim 1, **characterised in that** the mobile dictating microphone unit (1) comprises a tactile input unit (6).

3. Mobile dictating system according to claim 1 or 2, **characterised in that** the first radio interface unit (7) and the second radio interface unit (10) are constructed as Bluetooth interfaces, LF or HF interfaces or IR interfaces.

4. Mobile dictating system according to one or more of the preceding claims, **characterised in that** the microcomputer unit (2) on storage of the data in the memory unit (3) allocates to each packet the data size and consecutive number.

5. Mobile dictating system according to one or more of the preceding claims, **characterised in that** the microcomputer unit (2) provides the data, which is to be transmitted, with a header fife or a header in which the microcomputer unit (2) enters the data amount of each data packet and the number thereof.

6. Mobile dictating system according to one or more of the preceding claims, **characterised in that** the mobile dictating microphone unit (1) comprises an interface for expansion of the storage capacity of the memory unit (3), wherein the interface is provided for reception of an SD memory card or multimedia memory card, a mini-SD card or a memory stick.

7. Mobile dictating system according to one or more of the preceding claims, **characterised in that** the mobile dictating microphone unit (1) is formed as a headset or to be fastenable to the head of a user.

8. Mobile dictating system according to one or more of the preceding claims, **characterised in that** the mobile dictating microphone unit (1) comprises an acoustic output unit (5) which is designed as an earphone and/or the indicating unit indicates whether data are stored in the memory unit (3), wherein the indicating unit is an optical indicator in the form of a diode or an acoustic indicator.

9. Mobile dictating system according to one or more of the preceding claims, **characterised in that** the microcomputer unit (2) enables switching-off of the mobile dictating microphone unit (1) only when the memory unit (3) is empty.

10. Mobile dictating system according to one or more of the preceding claims, **characterised in that** the microcomputer unit (2) in reaction to inputs of a user at the tactile input unit (6) demands from the base station (PC) data packets stored there and these are then transmitted to the mobile dictating microphone unit (1) and able to be reproduced by way of the acoustic output unit (4).

11. Mobile dictating system according to one or more of the preceding claims, **characterised in that** the microcomputer unit (2) identifies the return-transmitted data as such in the memory unit (3) and transmits these back only when these data are changed by a user in the memory unit (3) by way of the tactile input unit (6) and/or the microcomputer unit (2) identifies the return-transmitted data as changed data when an insertion or erasure or partial erasure of the data was initiated by a user.

12. Mobile dictating system according to one or more of the preceding claims, **characterised in that** the microcomputer unit (2) indicates via the visualisation unit when the radio connection between the first and the second radio interface units (7, 10) is interrupted and/or the microcomputer unit (2) stores the data, which is input via the acoustic input unit (5), in the memory unit (3) until this is filled and/or the microcomputer unit (2) indicates the filling state of the memory unit (3) by way of the visualisation unit, wherein the visualisation unit is a display and displays filling state of the memory unit (3) as running bars.

13. Mobile dictating system according to one or more of tho preceding claims, **characterised in that** the microcomputer unit (2) generates a warning signal when reaching a degree of filling of at least 90%.

14. Mobile dictating system according to one or more of the preceding claims, **characterised in that** the acknowledgement signal, the erase function and the data transmission are organised in data packet manner.

## Revendications

1. Système à dicter mobile avec un microphone de dictée mobile, comprenant un micro-ordinateur (2), une unité de stockage (3), une unité d'entrée acoustique (4) et une première unité d'interface radio (7), dans lequel une liaison radio est créée au moyen de la première unité d'interface radio (7) du microphone de dictée (1) avec une station fixe (PC) comprenant une seconde unité d'interface radio, dans lequel des entrées acoustiques ont lieu dans l'unité d'entrée acoustique (4), une unité de conversion analogique numérique (9) numérise ces entrées et le micro-ordinateur (2) enregistre ces entrées numérisées dans l'unité de stockage (3), **caractérisé en ce que** le micro-ordinateur (2) transmet ces données enregistrées de manière continue à la première unité d'interface radio (7), laquelle transmet ces données enregistrées par le biais de la liaison radio du microphone de dictée (1) à la seconde unité d'interface radio (10) de la station fixe (PC), la station fixe (PC) enregistre les données transmises, le micro-ordinateur (2) contrôle les données enregistrées depuis l'unité de stockage (3) en cas de liaison radio existante entre la première unité d'interface radio (7) et la seconde unité d'interface radio (10) de manière continue et à débit maximal de transfert de données disponible pour la transmission, le micro-ordinateur (2) interrompant, lors de la reconnaissance d'une interruption et/ou d'une panne de la liaison radio, le transfert de données et enregistrant alors les données provenant de l'unité de conversion analogique numérique (9) dans l'unité de stockage (3) jusqu'à ce que l'interruption et/ou la panne de la liaison radio ait disparu, le micro-ordinateur (2) regroupant, lors de l'enregistrement des données dans l'unité de stockage (3), les paquets de données entrant et le micro-ordinateur (2) supprimant les données de l'unité de stockage (3), dès qu'un signal de réception est reçu, lequel est envoyé de la station fixe (PC) après chaque réception d'un paquet de données, et le microphone de dictée mobile (1) présentant une unité d'affichage.

2. Système à dicter mobile selon la revendication 1, **caractérisé en ce que** le microphone de dictée mobile (1) présente une unité d'entrée tactile (6).

3. Système à dicter mobile selon la revendication 1 ou 2, **caractérisé en ce que** la première unité d'interface radio (7) et la seconde unité d'interface radio (10) sont conçues comme des interfaces Bluetooth, des interfaces LF ou HF, ou des interfaces IR.

4. Système à dicter mobile selon l'une quelconque des revendications précédentes, **caractérisé en ce que** le micro-ordinateur (2), lors de l'enregistrement des données dans l'unité de stockage (3), attribue à chaque paquet la taille des données et une numérotation continue.

5. Système à dicter mobile selon l'une quelconque des revendications précédentes, **caractérisé en ce que** le micro-ordinateur (2) dote les données à transmettre d'un fichier d'en-tête ou d'un en-tête, dans lequel le micro-ordinateur (2) inscrit la quantité de données d'un paquet de données individuel et son numéro.

6. Système à dicter mobile selon l'une quelconque des revendications précédentes, **caractérisé en ce que** le microphone de dictée mobile (1) présente une interface pour augmenter la capacité de stockage de l'unité de stockage (3), l'interface étant prévue pour recevoir une carte mémoire SD ou une carte mémoire multimédia, une mini carte SD ou une carte mémoire flash.

7. Système à dicter mobile selon l'une quelconque des revendications précédentes, **caractérisé en ce que** le microphone de dictée mobile (1) est conçu comme un micro-casque ou de manière à pouvoir être fixé sur la tête d'un utilisateur.

8. Système à dicter mobile selon l'une quelconque des revendications précédentes, **caractérisé en ce que** le microphone de dictée mobile (1) présente une unité de sortie acoustique (5), laquelle est conçue comme une oreillette et/ou l'unité d'affichage affiche si les données sont enregistrées dans l'unité de stockage (3), l'unité d'affichage étant un affichage optique ayant la forme d'une diode ou est un affichage acoustique.

9. Système à dicter mobile selon l'une quelconque des revendications précédentes, **caractérisé en ce que** le micro-ordinateur (2) permet d'éteindre le microphone de dictée mobile (1) uniquement lorsque l'unité de stockage (3) est vide.

10. Système à dicter mobile selon l'une quelconque des revendications précédentes, **caractérisé en ce que** le micro-ordinateur (2), en réaction aux entrées d'un utilisateur, demande a l'unité d'entrée tactile (6) de la station fixe (PC) les paquets de données qui y sont enregistrés, ceux-ci étant alors transférés au microphone de dictée mobile (1) et étant aptes à être restitués par le biais de l'unité de sortie acoustique (4).

11. Système à dicter mobile selon l'une quelconque des revendications précédentes, **caractérisé en ce que** le micro-ordinateur (2) caractérise les données retransmises en tant que telles dans l'unité de stockage (3) et ne retransmet celles-ci seulement une fois que ces données sont modifiées par un utilisateur dans l'unité de stockage (3) par le biais de l'unité d'entrée tactile (6) et/ou le micro-ordinateur (2) caractérise les données retransmises en tant que données modifiées lorsqu'une insertion ou une suppression, ou une suppression partielle des données a été initiée par un utilisateur.

12. Système à dicter mobile selon l'une quelconque des revendications précédentes, **caractérisé en ce que** le micro-ordinateur (2) affiche par le biais de l'unité de visualisation si la liaison radio entre la première et la seconde unités d'interface radio (7, 10) est interrompue et/ou le micro-ordinateur (2) enregistre les données qui sont entrées par le biais de l'unité d'entrée acoustique (5) dans l'unité de stockage (3), jusqu'à ce que celle-ci soit pleine et/ou le micro-ordinateur (2) affiche le niveau de remplissage de l'unité de stockage (3) par le biais de l'unité de visualisation, l'unité de visualisation étant un écran et affichant le niveau de remplissage de l'unité de stockage (3) sous forme de barre.

13. Système à dicter mobile selon l'une quelconque des revendications précédentes, **caractérisé en ce que** le micro-ordinateur (2) émet un signal d'avertissement lorsqu'un niveau de remplissage d'au moins 90 % est atteint.

14. Système à dicter mobile selon l'une quelconque des revendications précédentes, **caractérisé en ce que** le signal de réception, la fonction de suppression et la transmission des données sont organisés sous forme de paquets de données.
